# EUROPÄISCHE PATENTANMELDUNG

(11) **EP 1 459 948 A2**
(43) Veröffentlichungstag der Anmeldung: **22.09.2004**
(21) Anmeldenummer: 04005965.1
(22) Anmeldetag: 12.03.2004
(51) Int. Cl.: B60R 21/26

(54) **Aufblasvorrichtung für ein Fahrzeuginsassen-Rückhaltesystem**

(30) Priorität: 17.03.2003 DE 20304249 U
(71) Anmelder: TRW Airbag Systems GmbH, 84544 Aschau am Inn (DE)
(72) Erfinder: Ruckdeschel, Rolf, 87645 Schwangau (DE)
(74) Vertreter: Sulzbach, Werner, Dipl.-Chem. Dr.

(57) **Zusammenfassung**

Die Erfindung betrifft eine Aufblasvorrichtung (10) zur Verwendung in einem Fahrzeuginsassen-Rückhaltesystem, mit einem Gehäuse (12), einem im Gehäuse aufgenommenen Anzünder (14) und einem ersten, an das Gehäuse (12) angeschlossenen Schnurgasgenerator (22) mit einem schnurförmigen Treibstoffstrang (24), die dadurch gekennzeichnet ist, daß das Anzündergehäuse (12) mindestens eine Entlastungsöffnung (20a, 20b) aufweist, die einem Umgebungsbereich außerhalb des ersten Schnurgasgenerators zugeordnet ist.

## Beschreibung

Die Erfindung betrifft eine Aufblasvorrichtung für ein Fahrzeuginsassen-Rückhaltesystem mit einem Gehäuse, einem in dem Gehäuse aufgenommenen Anzünder, und wenigstens einem an das Gehäuse angeschlossenen Schnurgaserzeuger mit einem schnurförmigen Treibstoffstrang.

Derartige Aufblasvorrichtungen werden überall dort verwendet, wo eine besonders rasche Gaserzeugung erfolgen soll. So zeigt die DE 41 34 995 C1 ein Seitenaufprallschutzsystem für Insassen eines Kraftfahrzeugs, bei der ein Treibstoffstrang in einer Gaserzeugerschnur benutzt wird, der das Gas unmittelbar an der benötigten Stelle erzeugt und damit zeitaufwendige Strömungsvorgänge vermeidet. Solche Systeme weisen die bei einem Seitenaufprall erforderlichen kurzen Reaktionszeiten auf. Aufblasvorrichtungen mit schnurförmigen Treibstoffsträngen können beliebig geformte Flächen aufspannen, wodurch eine sehr gute Anpassung von Seitenaufprallschutzsystemen an die räumlichen Bedingungen in einem Kraftfahrzeug möglich ist.

Die für derartige Aufblasvorrichtungen verwendeten Anzünder sind Sonderanfertigungen und deshalb sehr teuer. Serienanzünder aus konventionellen pyrotechnischen Aufblasvorrichtungen, wie z.B. Frontairbags für Fahrer oder Beifahrer, weisen eine sehr große Leistung auf und eignen sich deshalb nicht zur Verwendung mit schnurförmigen Gaserzeugern. Würde man derartige konventionelle Anzünder für die Zündung eines schnurförmigen Treibstoffstrangs verwenden, so würde dieser vor der Zündung derart verformt oder beschädigt, daß seine Funktionssicherheit nicht mehr gewährleistet wäre.

In der DE 101 36 458 A1 ist eine Kombination aus einem schnurförmigen Gaserzeuger und einem pyrotechnischen Gasgenerator beschrieben, wobei der schnurförmige Gaserzeuger über einen Verbindungskanal an den pyrotechnischen Gasgenerator angeschlossen ist. Da die vom schnurförmigen Gaserzeuger freigesetzten Verbrennungsprodukte aber überwiegend gasförmig sind, ist eine sichere Aktivierung des pyrotechnischen Gasgenerators nicht immer gewährleistet.

Die Erfindung schafft demgegenüber eine einfach aufgebaute und kostengünstig herstellbare Aufblasvorrichtung der eingangs genannten Art, bei der das Gehäuse mindestens eine Entlastungsöffnung aufweist, die einem Umgebungsbereich außerhalb des ersten Schnurgaserzeugers zugeordnet ist. Die Energie der vom Anzünder freigesetzten Verbrennungsprodukte kann somit nur teilweise auf den schnurförmigen, gaserzeugenden Treibstoffstrang einwirken, während die weiteren Anteile der freigesetzten Verbrennungsprodukte das Anzündergehäuse durch die Entlastungsöffnung(en) verlassen können. Damit wird auch bei Verwendung eines konventionellen Serienanzünders mit hoher Leistung einerseits eine sichere Zündung des Treibstoffstrangs garantiert, andererseits aber auch sichergestellt, daß weder das Gehäuse noch der schnurförmige Treibstoffstrang durch zu große mechanische Kräfte zerstört oder so stark beschädigt werden, daß die ordnungsgemäße Funktion der gesamten Aufblaseinrichtung beeinträchtigt wird. Durch die Festlegung des Strömungsquerschnitts der Entlastungsöffnungen läßt sich die auf den Treibstoffstrang einwirkende Energiemenge sehr genau steuern. Die bisher verwendeten Standardkomponenten können somit in einfacher Weise durch Einbringen von entsprechenden Bohrungen in das Anzünderanschlußgehäuse verändert werden. Dies gestattet die Verwendung kostengünstiger Bauteile bei der Herstellung der erfindungsgemäßen Aufblasvorrichtung.

"Schnurförmige" Treibstoffstränge im Sinne der Erfindung sind solche mit einem Verhältnis von Länge zu Durchmesser von etwa > 50, vorzugsweise > 100.

Besonders bevorzugt ist eine Ausführungsform, bei der das Gehäuse eine Anzünderkammer umschließt und die Anzünderkammer nach der Aktivierung des Anzünders über eine der Entlastungsöffnungen mit einem Umgebungsbereich außerhalb des Gehäuses in Fluidverbindung steht. Dies bedeutet, daß vom Anzünder erzeugte Verbrennungsprodukte aus der Anzünderkammer in den Umgebungsbereich gelangen, ohne noch eine weitere Anzündwirkung entfalten zu können. Den weiteren Öffnungen ist hier vorteilhafterweise wenigstens ein Filter zugeordnet.

In einer weiteren Ausführungsform weist die Aufblasvorrichtung einen zusätzlichen pyrotechnischen Gasgenerator mit Treibstoffelementen auf, der über eine der Entlastungsöffnungen mit dem Anzünder in Fluidverbindung steht, so daß die Treibstoffelemente durch die vom Anzünder freigesetzten Verbrennungsprodukte gezündet werden, wobei diese vorzugsweise eine wesentlich längere Abbrandzeit als der schnurförmige Treibstoffstrang haben. Auf diese Weise können die Treibstoffelemente des pyrotechnischen Gasgenerators ohne einen zusätzlichen Anzünder gezündet werden. Aus den weiteren Treibstoffelementen wird somit zusätzliches Gas zum Betrieb der Aufblasvorrichtung bereitgestellt. Da die Treibstoffelemente über einen wesentlich längeren Zeitraum Gas liefern als der vergleichsweise rasch abbrennende Treibstoffstrang, kann die Standzeit der Gassäcke bei der hier dargestellten Lösung gegenüber Ausführungen mit reinen Schnurgasgeneratoren deutlich vergrößert werden.

Bevorzugt sind die Treibstoffelemente in einer Schüttung angeordnete Treibstofftabletten. Diese Ausführungsform stellt ein zuverlässiges Abbrennen der Treibstoffelemente sicher.

Besonders bevorzugt ist es, wenn die Aufblasvorrichtung mindestens einen weiteren schnurFörmigen Treibstoffstrang aufweist, der an das Gehäuse für den Anzünder angeschlossen ist. Es ist so möglich, verschiedene Schutzeinrichtungen an verteilten Orten im Kraftfahrzeug aufzublasen. Durch die Größe der den jeweiligen Schnurgaserzeugern zugeordneten Öffnungen im Gehäuse kann die Energiezufuhr zu den einzelnen Treibstoffsträngen genau festgelegt werden.

Weitere Vorteile der Erfindung ergeben sich aus der nachfolgenden Beschreibung bevorzugter Ausführungsformen und der Zeichnung. In der Zeichnung zeigen:
- Figur 1 eine schematische Querschnittsansicht einer ersten Ausfiihrungsform einer erfindungsgemäßen Aufblasvorrichtung,
- Figur 2 einen Schnitt durch ein Detail einer zweiten Ausführungsform der erfindungsgemäßen Aufblasvorrichtung, und
- Figur 3 eine schematische Querschnittsansicht einer dritten Ausführungsform der erfindungsgemäßen Aufblasvorrichtung.

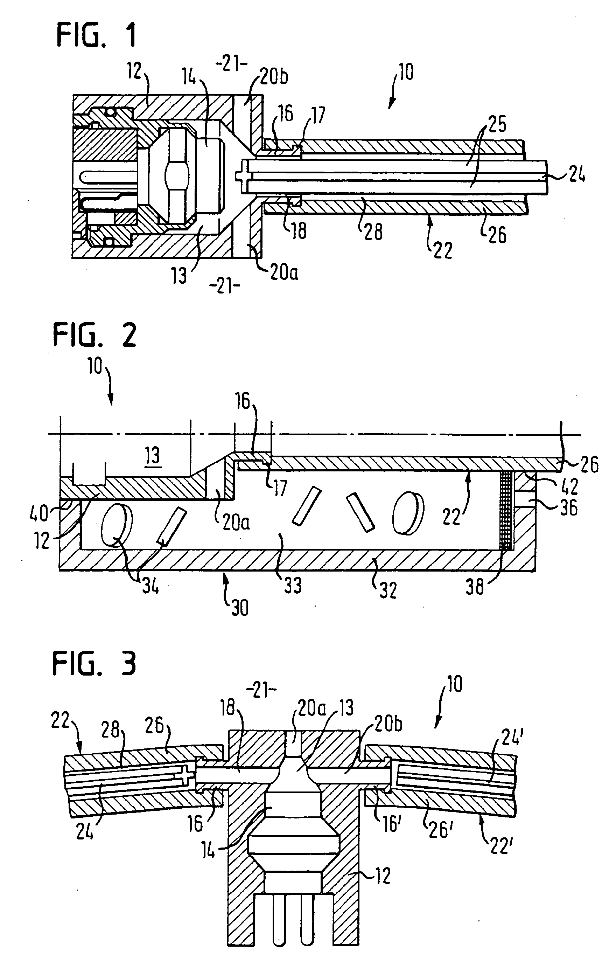

Die in Figur 1 dargestellte bevorzugte Ausführungsform einer Aufblasvorrichtung 10 zeigt ein Gehäuse 12, das eine Anzünderkammer 13 definiert, in der ein Anzünder 14 aufgenommen ist. Das Gehäuse 12 weist einen dem Anzünder 14 gegenüberliegenden rohrförmigen Ansatz 16 mit einer darin zentral angeordneten kreisförmigen ersten Öffnung 18 auf. Darüber hinaus hat das Gehäuse 12 Entlastungsöffnungen 20a und 20b, deren Mittelachsen hier senkrecht zu der Mittelachse der ersten Öffnung 18 liegen. Im Betriebszustand, d.h. nach der Aktivierung des Anzünders 14 stellen die weiteren Öffnungen 20a und 20b eine Fluidverbindung zwischen der Anzünderkammer 13 und einem freien Umgebungsbereich 21 her. Im Ausgangszustand sind die Entlastungsöffnungen 20a, 20b vorzugsweise mit einer Verdämmung aus Al-Folie gegenüber dem Umgebungsbereich 21 abgedichtet.

Die Aufblasvorrichtung 10 weist weiter einen Schnurgaserzeuger 22 mit einem schnurförmigen, gaserzeugenden Treibstoffstrang 24 und einem den Treibstoffstrang 24 umschließenden schlauchförmigen Gehäuse 26 auf, das vorzugsweise aus einem druckbeständigen Material besteht. Der Treibstoffstrang 24 hat einen kreuzförmigen Querschnitt, wodurch Durchgangskanäle 25 in der Längsrichtung des Schnurgaserzeugers ausgebildet sind. Die Außenabmessungen des Treibstoffstrangs 24 sind geringfügig kleiner als die Innenabmessungen des schlauchförmigen Gehäuses 26, wodurch ein Spalt 28 zwischen Treibstoffstrang und schlauchförmigem Gehäuse ausgebildet wird. Damit kann der Treibstoffstrang 24 leicht in das schlauchförmige Gehäuse 26 eingeschoben werden und ist dennoch sicher in diesem fixiert. Der Schnurgaserzeuger 22 ist in üblicher Weise zu einem wesentlichen Teil seiner Längenabmessung in die aufblasbare Sicherheitseinrichtung (hier nicht gezeigt) eingesetzt.

Zum Anschluß des Schnurgaserzeugers 22 an das Gehäuse 12 reicht der Treibstoffstrang 24 an seinem dem Anzünder 14 zugewandten Ende über das schlauchförmige Gehäuse 26 hinaus in die erste Öffnung 18 und in die Anzünderkammer 13 hinein. Das schlauchförmige Gehäuse 26 ist hier über den Ansatz 16 des Anzündergehäuses 12 geschoben, wobei der Ansatz 16 in dem Spalt 28 zwischen dem Treibstoffstrang 24 und dem schlauchförmigen Gehäuse 26 liegt. Am freien Ende des Ansatzes 16 ist ein Außenwulst 17 angeordnet, der dafür sorgt, daß das schlauchförmige Gehäuse 26 des Schlauchgasgenerators 22 sicher, dicht und stabil an dem Anzündergehäuse 12 festgelegt ist. Das schlauchförmige Gehäuse kann auch in den rohrförmigen Ansatz eingeschoben und in geeigneter Weise, z.B. durch Schweißen, Kleben oder Löten, zusätzlich befestigt sein.

Im folgenden wird die Funktionsweise dieser Ausführungsform der Aufblasvorrichtung dargestellt:

Sobald ein im Fahrzeug angeordneter Sensor einen Fahrzeugunfall feststellt, wird über ein elektrisches Signal der Anzünder 14 aktiviert. Der Anzünder 14 erzeugt eine Gasdruckwelle, die den Treibstoffstrang 24 entzündet. Die zwischen den Kreuzbalken des Treibstoffstrangs 24 gebildeten Durchgangskanäle leiten die vom Anzünder 14 erzeugte Druckwelle mit Überschallgeschwindigkeit entlang des gesamten Schnurgasgenerators weiter. Dadurch wird der Treibstoffstrang 24 überall an seiner Oberfläche sehr rasch gezündet und brennt innerhalb weniger Millisekunden ab. Das aus dem Treibstoffstrang 24 freigesetzte Gas bläst die dem Schnurgaserzeuger 22 zugeordnete Sicherheitseinrichtung, beispielsweise einen Seitengassack, auf.

Die nicht für die Zündung erforderliche, vom Anzünder 14 freigesetzte Energie wird zur Entlastung des schnurförmigen Treibstoffstrangs 24 über die Entlastungsöffnungen 20a, 20b aus dem Anzündergehäuse 12 in den freien Umgebungsbereich 21 ausgeleitet. Die Durchmesser der Entlastungsöffnungen 20a, 20b sind dabei so bemessen, daß eine ausreichende Leistung zur Zündung des schnurförmigen Treibstoffstrangs 24 zur Verfügung steht, der Treibstoffstrang 24 jedoch nicht verformt bzw. beschädigt oder gar aus seiner Verankerung am Ansatz 16 gerissen wird und damit seine Funktionsfähigkeit verliert.

In Figur 2 ist eine zweite Ausführungsform der Erfindung in einer Detailansicht dargestellt. Der (hier nicht dargestellte) Anzünder, das Gehäuse 12 und der Schnurgaserzeuger 22 sind wie in der ersten Ausführungsform ausgebildet, wobei Teile gleicher Funktion mit den gleichen Bezugszeichen bezeichnet sind.

Die Aufblasvorrichtung 10 weist hier weiter einen pyrotechnischen Gasgenerator 30 mit einem Gasgeneratorgehäuse 32 auf, das eine Brennkammer 33 umschließt, in der Treibstofftabletten 34 angeordnet sind. Der pyrotechnische Gasgenerator 30 steht wenigstens über die Entlastungsöffnung 20a mit der Anzünderkammer 13 in Fluidverbindung (siehe Figur 1). An dem dem Anzündergehäuse 12 abgewandten Ende des Gasgeneratorgehäuses 32 befinden sich axiale und/oder radiale Ausströmöffnungen 36. In der Brennkammer 33 ist im Bereich der Ausströmöffnungen 36 ein Filter 38 angeordnet. Besonders bevorzugt ist das Gehäuse 12 sowie der an das Gehäuse 12 angrenzende Endabschnitt des Schnurgaserzeugers 22 vom Gehäuse 32 des pyrotechnischen Gasgenerators 30 umfangsmäßig umschlossen. Bei dieser Ausführungsform definiert die Brennkammer 33 den Umgebungsbereich 21.

Das Gasgeneratorgehäuse 32 ist außerdem an einer ersten Verbindungsstelle 40 gasdicht mit dem Gehäuse 12 und an einer zweiten Verbindungsstelle 42 gasdicht mit dem schlauchförmigen Gehäuse 26 des Schlauchgasgenerators 22 verbunden.

Die zweite Ausführungsform der Aufblasvorrichtung hat folgende Funktionsweise:

Der Anzünder 14 wird bei einem Fahrzeugunfall in gleicher Weise wie in der ersten Ausführungsform aktiviert. Ein Teil der vom Anzünder freigesetzten Verbrennungsprodukte bzw. die vom Anzünder erzeugte Gasdruckwelle zündet auch hier schlagartig den Treibstoffstrang 24, während ein weiterer Teil der Verbrennungsprodukte durch die Entlastungsöffnung 20a in die Treibstoffkammer 33 des pyrotechnischen Gasgenerators 30 eintritt und die Treibstofftabletten 34 zündet. Das aus der Zündung der Treibstofftabletten 34 entstehende Gas wird dann am Filter 38 gefiltert und gekühlt und verläßt über die Ausströmöffnungen 36 den pyrotechnischen Gasgenerator 30. Durch weitere (nicht dargestellte) Mittel kann das Gas dann einer Fahrzeuginsassen-Schutzvorrichtung, wie zum Beispiel einem Airbag, zugeführt werden. Da die Abbrandzeit der Treibstofftabletten 34 deutlich größer ist als die des schnurförmigen Treibstoffstrangs 24, ist es so möglich, die Standzeit des aufgeblasenen Airbags zu verlängern. Damit wird die Schutzwirkung des Airbags deutlich verbessert, insbesondere in Unfallsituationen wie einem Überschlag, in denen der Fahrzeuginsasse innerhalb kürzester Zeit mehrmals Schutz durch den Airbag benötigt.

Figur 3 zeigt in einer dritten Ausführungsform die Aufblasvorrichtung 10 mit dem Anzünder 14 in dem Gehäuse 12. Das Gehäuse 12 hat hier zwei radial vorstehende Ansätze 16 und 16', an die über die Öffnungen 18 und 18' jeweils ein Schnurgaserzeuger 22 und 22' angeschlossen ist. Die Schnurgaserzeuger 22, 22' können in verschiedenen - auch deutlich voneinander entfernten - Bereichen des Fahrzeuginnenraums angeordnet sein. Wie in der ersten Ausführungsform sind sie aus einem schnurförmigen Treibstoffstrang 24, 24' und einem schlauchförmigen Gehäuse 26, 26' aufgebaut. Der Schnurgaserzeuger 22 ist hier mit seinem rechten Ende an den Ansatz 16 des Anzündergehäuses 12, der Schnurgaserzeuger 22' mit seinem linken Ende an den Ansatz 16' des Gehäuses angeschlossen.

In folgendem wird die Funktionsweise der dritten Ausführungsform der Aufblasvorrichtung erläutert:

Wird der Anzünder 14 aktiviert, so entzünden die freigesetzten Verbrennungsprodukte bzw. die Gasdruckwelle die beiden Treibstoffstränge 24 und 24'. Ein Teil der Verbrennungsprodukte tritt durch die Entlastungsöffnung 20a in den freien Umgebungsbereich 21 aus. Das Verhältnis der den Schnurgaserzeugern 22, 22' zugeführten Anzünderleistung zu der über die Entlastungsöffnung 20a an den freien Umgebungsbereich 21 abgeführten Entlastung kann durch die Größe der Öffnungen 18, 18' und 20a eingestellt werden.

Es versteht sich, daß neben den beiden dargestellten Schnurgasgeneratoren 22, 22' noch weitere Schnurgasgeneratoren an das Anzündergehäuse 12 angeschlossen werden können. Damit können dritte und weitere Bereiche eines Kraftfahrzeugs mit durch nur einen Anzünder aktivierten Fahrzeuginsassen-Rückhaltesystemen versehen werden. In diesem Fall kann die Entlastungsöffnung 20a auch die Funktion einer Anschlußöffnung für einen weiteren Schnurgaserzeuger übernehmen.

## Patentansprüche

1. Aufblasvorrichtung (10) zur Verwendung in einem Fahrzeuginsassen-Rückhaltesystem, mit einem Gehäuse (12), einem im Gehäuse aufgenommenen Anzünder (14) und einem ersten, an das Gehäuse (12) angeschlossenen Schnurgasgenerator (22) mit einem schnurförmigen Treibstoffstrang (24), **dadurch gekennzeichnet, daß** das Anzündergehäuse (12) mindestens eine Entlastungsöffnung (20a, 20b) aufweist, die einem Umgebungsbereich außerhalb des ersten Schnurgasgenerators zugeordnet ist.

2. Aufblasvorrichtung nach Anspruch 1, **dadurch gekennzeichnet, daß** das Gehäuse eine Anzünderkammer (13) umschließt und die Anzünderkammer (13) nach Aktivierung des Anzünders (16) über wenigstens eine der Entlastungsöffnungen (20a, 20b) mit einem Umgebungsbereich (21) außerhalb des Gehäuses (12) in Fluidverbindung steht.

3. Aufblasvorrichtung nach Anspruch 1 oder 2, **dadurch gekennzeichnet, daß** die Aufblasvorrichtung (10) einen pyrotechnischen Gasgenerator (30) mit Treibstoffelementen (34) aufweist, der mit dem Anzünder (14) nach dessen Aktivierung über wenigstens eine der Entlastungsöffnungen (20a, 20b) zur Zündung der Treibstoffelemente (34) in Fluidverbindung steht.

4. Aufblasvorrichtung nach Anspruch 3, **dadurch gekennzeichnet, daß** die Treibstoffelemente (34) im pyrotechnischen Gasgenerator (30) eine längere Abbrandzeit aufweisen als der schnurförmige Treibstoffstrang (24).

5. Aufblasvorrichtung nach Anspruch 3 oder 4, **dadurch gekennzeichnet, daß** die Treibstoffelemente (34) in einer Schüttung angeordnete Treibstofftabletten sind.

6. Aufblasvorrichtung nach einem der vorhergehenden Ansprüche, **dadurch gekennzeichnet, daß** die Aufblasvorrichtung (10) mindestens einen weiteren an das Gehäuse (12) angeschlossenen schnurförmigen Treibstoffstrang (24') aufweist.
